# EUROPEAN PATENT APPLICATION

(11) **EP 4 604 188 A1**
(43) Date of publication of application: **20.08.2025**
(21) Application number: 24215463.1
(22) Date of filing: 26.11.2024
(51) Int. Cl.: H01M 4/04, H01M 4/134, H01M 4/1393, H01M 4/1395, H01M 4/36, H01M 4/38, H01M 4/583, H01M 10/0525, H01M 10/0587, H01M 10/12, H01M 4/02

(54) **SECONDARY BATTERY AND METHOD OF MANUFACTURING THE SAME**

(30) Priority: 14.02.2024 KR 20240020964
(71) Applicant: SAMSUNG SDI CO., LTD., Yongin-si, Gyeonggi-do 17084 (KR)
(72) Inventor: Jung, Hyun Ki, Yongin-si, Gyeonggi-do 17084 (KR)
(74) Representative: Gulde & Partner

(57) **Abstract**

A secondary battery including a fine electrode pattern and a method of manufacturing the same. The secondary battery includes an electrode assembly having a positive electrode having a positive electrode active material coated on a positive electrode substrate, a negative electrode having a negative electrode active material coated on a negative electrode substrate, and a separator.

## Description

### BACKGROUND

### 1. Field

Embodiments relate to a secondary battery and a method of manufacturing the same.

### 2. Description of the Related Art

In general, a secondary battery (e.g., a cylindrical secondary battery) may include a cylindrical electrode assembly, a cylindrical case or can configured to accommodate the electrode assembly and an electrolyte, and a cap assembly coupled to an opening of an upper end of the can to seal the can and to allow current generated by the electrode assembly to flow to an external device therethrough.

If the electrode assembly of the cylindrical secondary battery is coated, pattern coating may be performed by opening and closing a valve. However, the timing of the opening and closing of the valve may cause difficulty in realizing fine patterns, which may result in stress distribution in the electrode assembly.

The information disclosed in this section is provided only for enhancement of understanding of the background of the present disclosure and therefore it may contain information that does not form the prior art.

### SUMMARY

Embodiments of the present disclosure relate to a secondary battery in which a fine electrode pattern is implemented and stress over the lifespan of the battery is reduced and a method of manufacturing the same.

It should be noted that objects of the present are not limited to the object as mentioned above, and other unmentioned objects of the present disclosure will be clearly understood by those skilled in the art from the following description.

A first aspect of the present disclosure relates to a secondary battery which includes an electrode assembly having a positive electrode having a positive electrode active material coated on a positive electrode substrate, a negative electrode having a negative electrode active material coated on a negative electrode substrate, and a separator, wherein at least one of the positive electrode or the negative electrode includes an electrode pattern in which a first coating material and a second coating material are alternately coated (on the positive electrode substrate or on negative electrode substrate, respectively). Preferably, the first coating material and a second coating material are alternately coated in an active material coating direction.

The first coating material and the second coating material in the negative electrode may be different from each other.

The first coating material may have a larger expansion rate than the second coating material.

The first coating material may be natural graphite, and the second coating material may be artificial graphite.

The first coating material may include a mixture of graphite and a Si-based compound, and the second coating material may include graphite.

The average particle size of the negative electrode active material in the first coating material may be greater than the average particle size of the negative electrode active material in the second coating material.

The first coating material may be coated on the negative electrode substrate up to first and second windings of the negative electrode, and the second coating material may be coated on the negative electrode substrate after the second winding.

The first coating material and the second coating material in the negative electrode may be identical to each other.

The electrode pattern in the negative electrode may include at least one non-coated portion between the first coating material and the second coating material.

The non-coated portion may have a coating direction width of 10 mm or less.

A second aspect of the present disclosure relates to a method of manufacturing a secondary battery including an electrode assembly as described above. The method includes forming the electrode assembly by coating a positive electrode active material on a positive electrode substrate to form a positive electrode, coating a negative electrode active material on a negative electrode substrate to form a negative electrode, and placing a separator between the positive electrode and the negative electrode. During the coating of the positive electrode active material and/or the coating of the negative electrode active material, a first coating material and a second coating material are alternately coated on the respective positive electrode substrate or negative electrode substrate. This may be realized a valve of a first cavity comprising a first coating material and a valve of a second cavity comprising a second coating material are alternately opened and closed.

The first cavity may include at least one first valve, the second cavity may include at least one second valve, and the first valve and the second valve may be configured to operate independently of each other such that if the first valve is in an open state, the second valve is in a closed state.

The first coating material and the second coating material may be identical to each other.

The first coating material and the second coating material may be different from each other.

The first coating material may include an active material having a larger expansion rate than the second coating material.

A third aspect relates to an apparatus for operating the method above, the apparatus comprises a valve of a first cavity comprising a first coating material and a valve of a second cavity comprising a second coating material. Bothe valves are configured to be alternately opened and closed. The apparatus may comprise a control unit configured to control the opening and closing the valve.

Preferably, the first cavity may include at least one first valve, the second cavity may include at least one second valve, and the first valve and the second valve may be configured to operate independently of each other such that if the first valve is in an open state, the second valve is in a closed state.

### BRIEF DESCRIPTION OF THE DRAWINGS

The accompanying drawings, which are incorporated in this specification, illustrate exemplary embodiments and serve to further illustrate the technical ideas of the present disclosure in conjunction with the detailed description of exemplary embodiments that follows, and the present disclosure is not to be construed as limited to what is shown in such drawings. In the drawings:
FIG. 1 is a perspective view schematically showing a secondary battery according to an embodiment of the present disclosure;
FIG. 2 is a sectional view of the cylindrical secondary battery of FIG. 1;
FIG. 3 is a sectional view schematically showing stress unbalance generated in a conventional jelly-roll type electrode assembly;
FIG. 4 is a sectional view schematically showing a rising portion and a drooping portion generated in a conventional secondary battery;
FIG. 5 shows an electrode pattern in a negative electrode of an electrode assembly of the secondary battery according to the embodiment of the present disclosure;
FIG. 6 is a sectional view of an electrode assembly having different coating materials applied to a predetermined area in accordance with an embodiment of the present disclosure;
FIGS. 7A and 7B show an example of a conventional electrode pattern implemented with identical negative electrode active materials;
FIGS. 8A and 8B show an example of an electrode pattern in the negative electrode of the electrode assembly according to the present disclosure in which a negative electrode active material including a first coating material and a second coating material, which are identical to each other, is applied;
FIG. 9 shows an electrode pattern in a positive electrode of the electrode assembly of the secondary battery according to the embodiment of the present disclosure;
FIG. 10 is a conceptual view schematically showing a conventional roll-to-roll coating process; and
FIG. 11 is a conceptual view schematically showing a roll-to-roll coating process of a manufacturing method according to another embodiment of the present disclosure.

### DETAILED DESCRIPTION

Hereinafter, exemplary embodiments will be described in detail with reference to the accompanying drawings. It should be understood that the terms or words used in the specification and appended claims should not be construed as being limited to general and dictionary meanings, but should be construed based on meanings and concepts according to the technical idea of the present disclosure on the basis of the principle that the inventor is permitted to define appropriate terms for the best explanation. Embodiments described in this specification and constructions shown in the drawings are merely the most preferred embodiments and do not speak for the entirety of the technical idea of the present disclosure, and therefore it should be understood that various replaceable equivalents and modifications may be possible at the time of filing the present application.

As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

The accompanying drawings may not be to scale and some components may be exaggerated in dimensions in order to facilitate understanding of the present disclosure. In different embodiments, the same components may be denoted by the same reference numerals.

A reference to two comparables being "identical" means that they are "substantially identical." Thus, substantially the same may include deviations that are considered low in the art, such as deviations of less than 5%. If a parameter is uniform in a given region, this may mean that the parameter is uniform from an average perspective.

Although first, second, and the like are used to describe various components, the components are not limited by these terms. These terms are used only to distinguish one component from another, and a first component may be a second component unless otherwise noted.

Throughout the specification, each component may be singular or plural unless otherwise indicated.

If any configuration is disposed "above" (or "below") a component or "on" (or "under") the component, this may mean not only that the configuration is disposed abutting an upper surface (or a lower surface) of the component, but that another configuration may be interposed between the component and the configuration disposed on (or under) the component.

It should also be understood that if a component is described as being "connected," "coupled," or "linked" to another component, the components may be directly connected or linked to each other, another component may be "interposed" between other components, or the components may be "connected," "coupled," or "linked" to each other via another component. If a part is said to be electrically coupled to another part, this includes not only direct connection but also connection with another element between.

Throughout the specification, references to "A and/or B" mean A, B, or A and B, unless otherwise indicated. "And/or" includes all combinations or any combination of a plurality of listed items. References to "C to D" mean C or higher and D or lower, unless otherwise indicated.

The terms used herein are intended to describe the embodiments of the present disclosure and are not intended to limit the present disclosure.

Hereinafter, a secondary battery according to an embodiment of the present disclosure and a method of manufacturing the same will be described in detail with reference to the accompanying drawings.

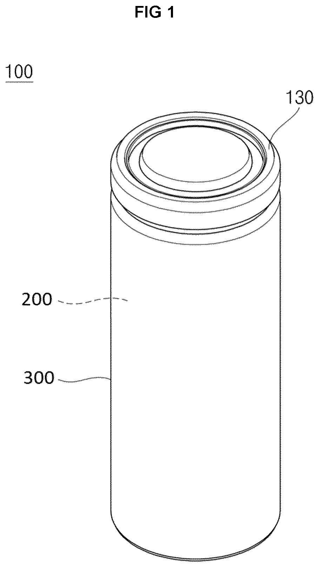

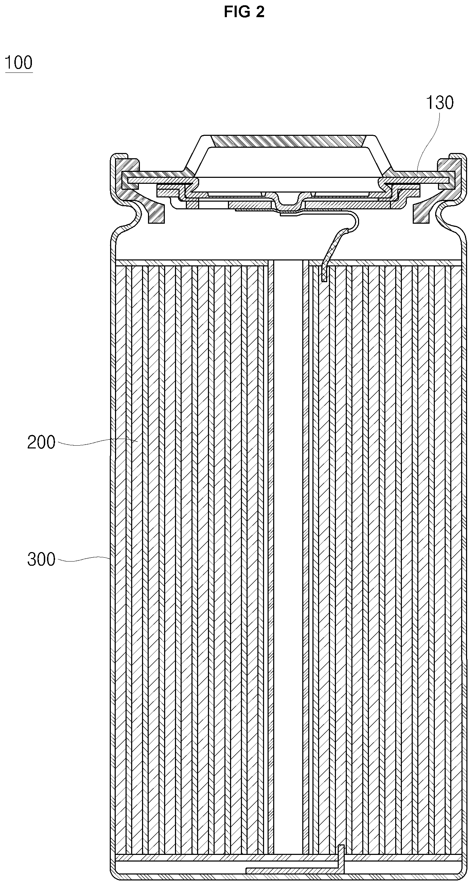

FIG. 1 is a perspective view schematically showing a secondary battery 100 according to an embodiment of the present disclosure, and FIG. 2 is a sectional view of the secondary battery 100 of FIG. 1. As shown in FIGs. 1 and 2, the secondary battery 100 may include an electrode assembly 200, a case 300 configured to accommodate the electrode assembly and an electrolyte therein, a cap assembly 130 coupled to an opening of the case 300 to seal the case 300, and an insulating plate between the electrode assembly and the cap assembly in the case.

The electrode assembly 200 may be a circular electrode assembly, but the shape of the electrode assembly is not limited thereto. The electrode assembly 200 may include a first electrode (e.g. positive electrode 120), a second electrode (e.g. negative electrode 110), and a separator between the first and second electrodes, and may be wound in a jelly-roll structure.

Herein, the first electrode is described as a positive electrode and the second electrode is described as a negative electrode for ease of description.

The positive electrode may include a positive electrode substrate and a positive electrode active material on the positive electrode substrate. A positive electrode lead tab may extend outwardly from a positive electrode non-coated portion of the positive electrode substrate where the positive electrode active material is not located, and the positive electrode lead tab may be electrically connected to the cap assembly.

The negative electrode may include a negative electrode substrate and a negative electrode active material on the negative electrode substrate. A negative electrode lead tab may extend outwardly from a negative electrode non-coated portion of the negative electrode substrate where the negative electrode active material is not located, and the negative electrode lead tab may be electrically connected to the case. The positive electrode lead tab and the negative electrode lead tab may extend in the same direction or in opposite directions from each other.

The positive electrode substrate may include, for example, aluminum foil, and the positive electrode active material may include, for example, a transition metal oxide. The negative electrode substrate may include, for example, copper foil or nickel foil, and the negative electrode active material may include, for example, graphite.

The separator may be configured to prevent a short circuit between the positive electrode and the negative electrode and allow for the migration of lithium ions. The separator may include, for example, a polyethylene film, a polypropylene film, or a polyethylene-polypropylene film. Depending on the type of a lithium secondary battery, a separator may be between the positive electrode and the negative electrode. Polyethylene, polypropylene, polyvinylidene fluoride, or two or more multilayer films thereof may be used as the separator.

The separator may include a porous substrate and a coating layer located on one surface or opposite surfaces of the porous substrate. The coating layer includes an organic material, an inorganic material, or a combination thereof.

The organic material may include a polyvinylidene fluoride-based polymer or a (meth)acrylic-based polymer.

The inorganic material may include inorganic particles selected from, but not limited to, Al₂O₃, SiO₂, TiO₂, SnO₂, CeO₂, MgO, NiO, CaO, GaO, ZnO, ZrO₂, Y₂O₃, SrTiO₃, BaTiOs, Mg(OH)₂, boehmite, and a combination thereof.

The organic material and the inorganic material may be present in one coating layer as a mixture, or may be present in the form in which a coating layer including an organic material and a coating layer including an inorganic material are laminated.

The case of the present disclosure may not only have a circular shape as shown in FIG. 1, but may also have various shapes, such as a prismatic shape. The case may be made of a metal, such as aluminum, an aluminum alloy, nickel-plated steel, a laminated film constituting a pouch, or plastic.

Although FIGs. 1 and 2 depict a circular secondary battery, the secondary battery of the present disclosure is not limited to a circular secondary battery or a prismatic secondary battery that includes an electrode structure of the electrode assembly described hereinafter.

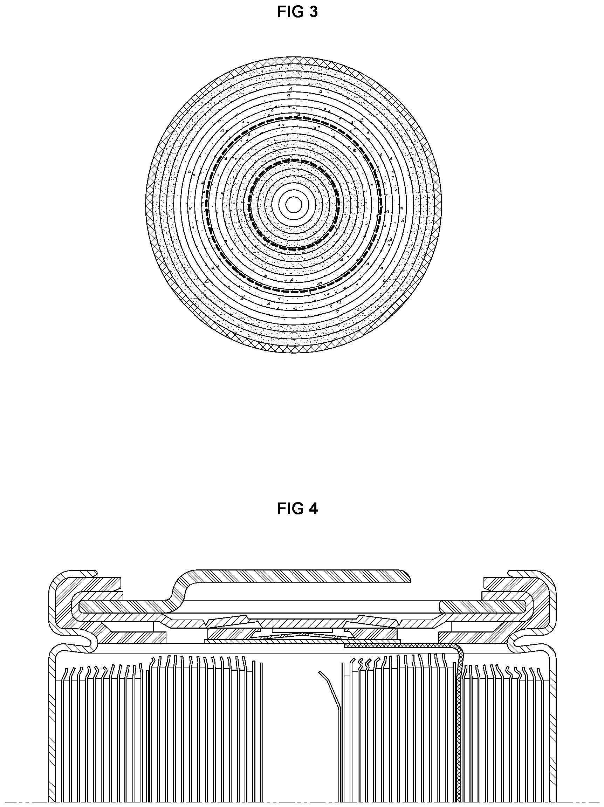

FIG. 3 is a cross-sectional view schematically showing stress unbalance generated in a conventional jelly-roll type electrode assembly having a spiral structure, and FIG. 4 is a cross-sectional view showing a rising portion at a front end of the positive electrode due to expansion of an electrode plate and a drooping portion at a rear end of the positive electrode after the lifespan of the secondary battery is expired (i.e., at the end of the lifespan).

Referring to FIGs. 3 and 4, pressure unevenness may occur in a certain part of a conventional electrode assembly, resulting in performance degradation, such as separator blocking, at a high stress position.

In order to prevent (or at least mitigate) pressure unevenness in the electrode assembly after the lifespan of the secondary battery is expired and to implement a fine electrode pattern described hereinafter, at least one of the positive electrode and the negative electrode may include an electrode pattern P1 or P2 in which each of the positive electrode active material and the negative electrode active material includes a first coating material and a second coating material alternately coated in a coating direction. Examples of the first and second coating materials of the positive electrode active material and the first and second coating materials of the negative electrode active material will be described hereinafter, but these are exemplary only and those skilled in the art will recognize that appropriate active materials may be applied depending on the desired secondary battery characteristics and manufacturing environments.

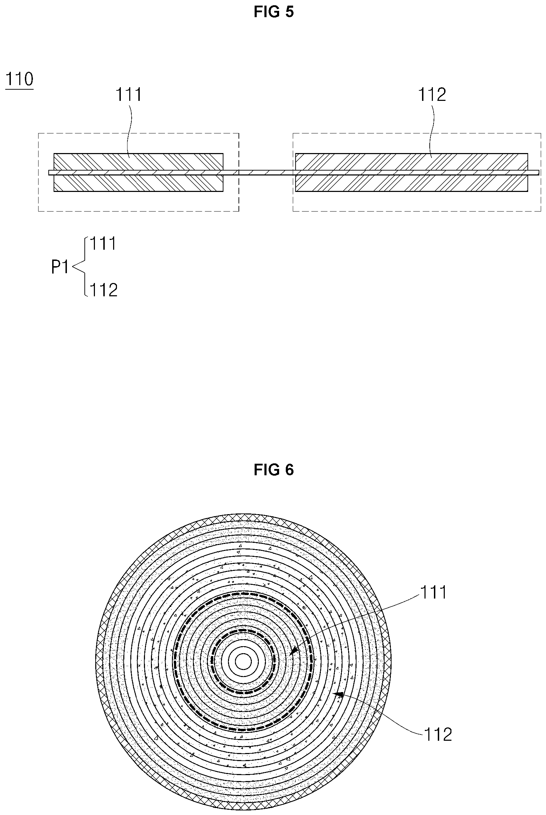

FIG. 5 depicts an electrode pattern in the negative electrode 110 of the electrode assembly of the secondary battery 100 according to the embodiment of the present disclosure. Referring to FIG. 5, the negative electrode 110 of the electrode assembly 100 of the secondary battery may include an electrode pattern P1 in which a first coating material 111 and a second coating material 112 are alternately coated in the direction in which the negative electrode active material is coated. In one or more embodiments, the first and second coating materials may be identical (or substantially identical) negative electrode active materials. The first and second coating materials may be manufactured so as to include at least one of negative electrode active materials listed below, but the negative electrode active materials listed below are exemplary only, and those skilled in the art will be able to make appropriate selection based on the desired secondary battery characteristics and manufacturing environments.

The negative electrode active material may include a material capable of reversibly intercalating/deintercalating lithium ions, lithium metal, a lithium metal alloy, a material capable of being doped and de-doped with lithium, or a transition metal oxide.

The material capable of reversibly intercalating/de-intercalating lithium ions may be a carbon-based negative electrode active material, which may include, for example, crystalline carbon, amorphous carbon, or a combination thereof. Examples of crystalline carbon may include graphite, such as natural graphite or artificial graphite, and examples of amorphous carbon may include soft carbon, hard carbon, mesoporous pitch carbide, or calcined coke. Natural graphite is mined directly from natural sources and typically exhibits specific characteristics such as larger particle sizes and a layered crystal structure. The natural graphite may be flake-type graphite, spherical graphite formed from flake-type graphite, or spherical graphite coated with pitch. Pitch is a viscoelastic material that comprises aromatic hydrocarbons. The natural graphite may be carbonized. Artificial graphite is a synthesized through the heat treatment of carbon rich materials such as petroleum coke, and has a uniform structure.

A Si-based negative electrode active material or a Sn-based negative electrode active material may be used as the material capable of being doped and de-doped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles.

The silicon-carbon composite may further include crystalline carbon. For example, the silicon-carbon composite may include a core including crystalline carbon and silicon particles and an amorphous carbon coating layer on the surface of the core.

The negative electrode 110 of the lithium secondary battery 100 includes a current collector (negative electrode substrate) and a negative electrode active material layer on the current collector. The negative electrode active material layer may include a negative electrode active material, and may further include a binder and/or a conductive agent.

In one or more embodiments, the negative electrode active material layer may include 90 wt% to 99 wt% of a negative electrode active material, 0.5 wt% to 5 wt% of a binder, and 0 wt% to 5 wt% of a conductive agent.

A non-aqueous binder, an aqueous binder, a dry binder, or a combination thereof may be used as the binder. In an embodiment in which an aqueous binder is used as the negative electrode binder, a cellulose-based compound configured to impart viscosity may be further included.

Any one selected from among copper foil, nickel foil, stainless steel foil, titanium foil, nickel foam, copper foam, a polymer substrate coated with a conductive metal, and a combination thereof may be used as the negative electrode current collector.

The electrolyte of the lithium secondary battery may include a non-aqueous organic solvent and a lithium salt.

The non-aqueous organic solvent may serve as a medium through which ions involved in electrochemical reaction of the battery can migrate.

The non-aqueous organic solvent may be a carbonate-based solvent, an ester-based solvent, an ether-based solvent, a ketone-based solvent, an alcohol-based solvent, an aprotic solvent, or a combination thereof, which may be used alone or in a mixture of two or more.

In an embodiment in which the carbonate-based solvent is used, a mixture of cyclic carbonate and chain carbonate may be used.

If different negative electrode active materials are selected as the first and second coating materials, an increase in stress in a certain region described with reference to FIGs. 3 and 4 may be prevented (or at least mitigated against). As an example, a second coating material having a smaller expansion rate than the first coating material may be applied to the negative electrode substrate together with the first coating material, and an increase in stress in the electrode plate may be completely (or substantially completely) prevented. Natural graphite may be applied as the first coating material and artificial graphite may be applied as the second coating material, or a mixture of graphite and a Si-based compound (SCN or SiOx) may be applied as the first coating material and artificial graphite or natural graphite having a smaller expansion rate may be applied as the second coating material. The Si-based compound may be for instance a composition of silicon dioxide (SiO₂) or silicon-carbon-nanocomposite (SCN). The properties of the first and second coating materials may be differentiated by applying a difference in the average particle size of the active material, such as applying a negative electrode active material as the first coating material having a smaller average particle size than the second coating material. The average particle size may be determined by SEM analysis and may refer to D50 average particle size.

In a manner similar to alternately coating the first and second coating materials, a coating material different from the coating material at the winding end may be applied to a predetermined region in the electrode assembly to prevent (or at least mitigate against) an increase in stress. FIG. 6 is a sectional view of an electrode assembly having different coating materials applied to a predetermined area in accordance with an embodiment of the present disclosure. Referring to FIG. 6, the electrode pattern may include the first coating material on the negative electrode substrate up to the first and second windings and the second coating material on the negative electrode substrate up to a predetermined number of windings thereafter (i.e., the third winding and subsequent windings). The first coating material may extend up to the tab and the winding end of the negative electrode substrate. This structure is configured to prevent (or at least mitigate) degradation of the electrode performance caused by the difference in electrode plate width expansion due to an increase in stress unbalance in the center of the jelly roll depending on the lifespan of the battery. In an embodiment in which a coating material having a smaller expansion rate than the first coating material is selected as the second coating material coated in the center, overall stress unbalance in the electrode assembly may be reduced.

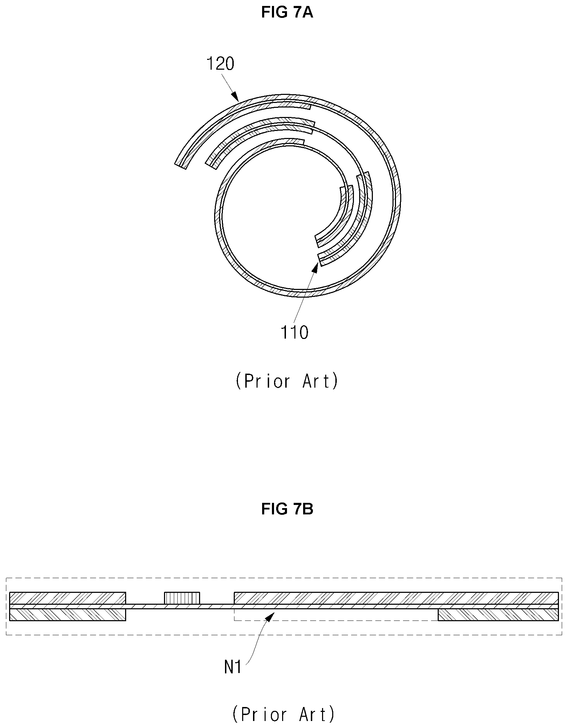

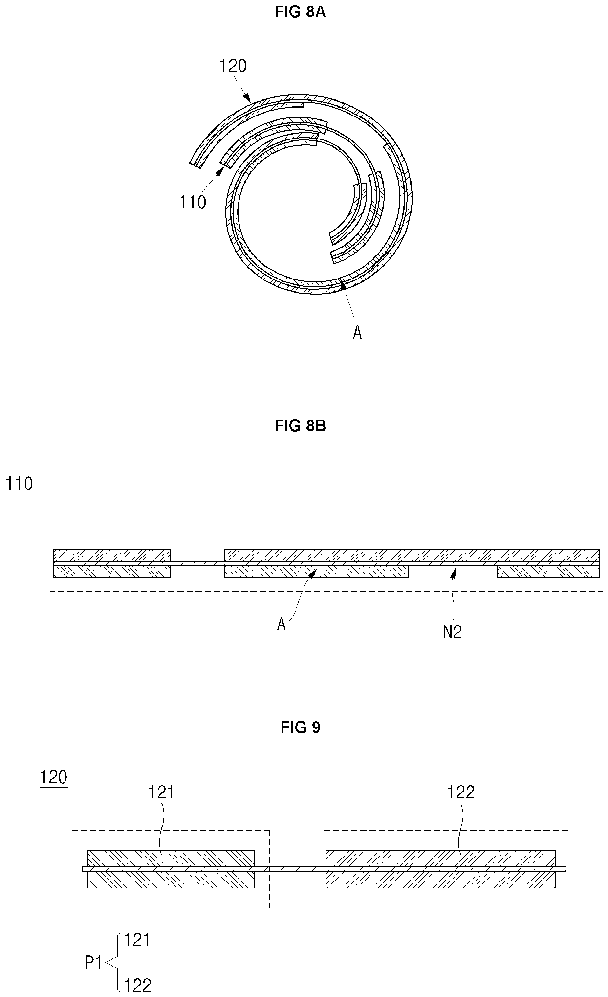

Next, an electrode pattern in which identical negative electrode active materials are selected as the first and second coating materials will be described with reference to FIGS. 7A and 7B and FIGS. 8A and 8B.

FIGS. 7A and 7B show an example of a conventional electrode pattern with identical negative electrode active materials, and FIGS. 8A and 8B show an electrode pattern with the first and second coating materials according to the present disclosure, wherein identical negative electrode active materials are applied as the first and second coating materials.

FIG. 7A shows that a positive electrode and a negative electrode are wound, and FIG. 7B is a sectional view of an electrode pattern of the negative electrode of FIG. 7A. If a complex pattern is to be implemented with one active material, a non-coated portion N1 may be unintentionally generated due to the opening and closing time of a valve configured to spray the active material, as shown in FIGs. 7A and 7B. In this specification, the non-coated portion N1 may refer to a part of at least one of the positive electrode and the negative electrode that is not coated with a coating material although the coating material is designed to be coated thereon.

FIG. 8A shows that the positive electrode and the negative electrode according to the embodiment of the present disclosure are wound, and FIG. 8B is a sectional view of an electrode pattern of the negative electrode of FIG. 8A. It can be seen from FIG. 8A that an additional coated region A is formed compared to FIG. 7A. As a result, the coating direction length of a non-coated portion N2 in the electrode pattern according to the embodiment of the present disclosure may be 5 mm to 15 mm or 10 mm or less. Controlling the coating direction length of the non-coated portion N2 to 10 mm or less means that those skilled in the art can coat the active material in the same manner as if the active material were coated on one surface of the substrate even for a complex electrode pattern.

Next, referring to FIG. 9, the positive electrode 120 of the electrode assembly 100 of the secondary battery according to the embodiment of the present disclosure may include an electrode pattern P2 in which a first coating material 121 and a second coating material 122 are alternately coated in the direction in which the positive electrode active material is coated in the same manner as the negative electrode 110 described with reference to FIG. 5.

In one or more embodiments, the first and second coating materials may be identical (or substantially identical) positive electrode active materials. The first and second coating materials may be manufactured to include at least one of positive electrode active materials listed below, but those skilled in the art will be able to make appropriate selection based on the desired characteristics and manufacturing environments.

A compound capable of reversibly intercalating and deintercalating lithium (lithiated intercalation compound) may be used as the positive electrode active material. A complex oxide with a metal selected from cobalt, manganese, nickel, and a combination thereof and lithium may be used.

The complex oxide may be a lithium transition metal complex oxide, and examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

The positive electrode 120 of the lithium secondary battery may include a current collector (positive electrode substrate) and a positive electrode active material layer formed on the current collector. The positive electrode active material layer may include a positive electrode active material, and may further include a binder and/or a conductive agent.

The content of the positive electrode active material may be 90 wt% to 99.5 wt% based on 100 wt% of the positive electrode active material layer, the content of the binder may be 0.5 wt% to 5 wt% based on 100 wt% of the positive electrode active material layer, and the content of the conductive agent may be 0.5 wt% to 5 wt% based on 100 wt% of the positive electrode active material layer.

Al may be used as the current collector, but the present disclosure is not limited thereto.

A description of aspects of the positive electrode identical to those of the negative electrode will be omitted for ease of description, and the description related to the negative electrode may also be applied to the positive electrode, unless inconsistent therewith.

As shown in FIGs. 5 and 9, each of the positive electrode 120 and the negative electrode 110 of the electrode assembly 100 may include an electrode pattern in which the first and second coating materials are alternately coated. Although not shown in detail, the negative electrode may include an electrode pattern in which the first and second coating materials are alternately coated, whereas the positive electrode may have a pattern in which one coating material is continuously coated.

A manufacturing method for forming the electrode pattern of the secondary battery described above will be briefly described, and a detailed description overlapping with the coating process of the conventional electrode pattern will be omitted for ease of description.

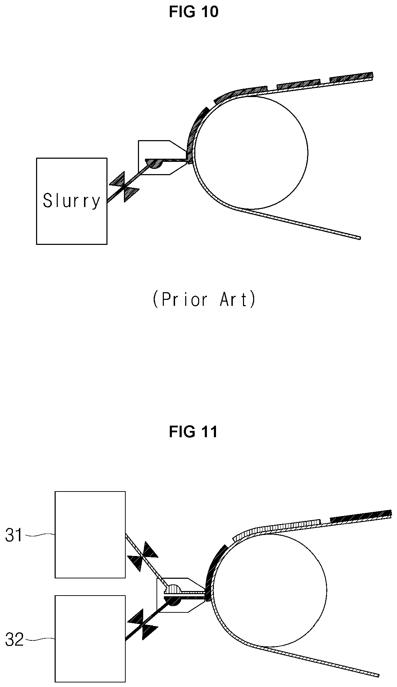

FIG. 10 shows a process in which a conventional negative or positive electrode coating material (slurry) is applied as uniformly and consistently as possible to a thin substrate through a roll-to-roll process using a coating machine. In order to implement various complex electrode patterns, opening and closing of a valve configured to discharge the slurry must be controlled, whereby an undesired non-coated portion may be generated. As a result, it may be difficult to control the non-coated portion so as to have a size of 10 mm or less.

In a method of manufacturing an electrode pattern of a secondary battery according to the present disclosure, a slurry including a negative or positive electrode coating material may be provided to different cavities, as shown in FIG. 11. In one or more embodiments, a first coating material 311 of the negative electrode active material may be provided (supplied) to a first cavity 31, and provided independently thereof, a second coating material 321 of the negative electrode active material may be provided (supplied) to a second cavity 32, which is provided separately from the first cavity 31. While a valve of the first cavity is open and the first coating material is coated on a substrate, a valve of the second cavity may be closed such that the second coating material is not sprayed. Subsequently, while the valve of the second cavity is open and the second coating material is coated on the substrate, the valve of the first cavity may be closed such that the first coating material is not sprayed (i.e., the first and second valves may be alternately opened and closed). As a result, an electrode pattern may be formed in which the first and second coating materials are alternately coated in the coating direction.

By including two independent cavities, i.e., the first and second cavities, problems caused by the limitation of controlling the valve timing in a conventional single cavity to achieve an electrode pattern, such as difficulty in controlling a non-coated portion or an inability to implement an electrode pattern including different coating materials, may be overcome.

As is apparent from the above description, embodiments provide a secondary battery in which a fine electrode pattern is implemented and stress over the lifespan of the battery is reduced, and a method of manufacturing the secondary battery.

The effects of the present disclosure are not limited to those described above, and other unmentioned technical effects will be apparent to those skilled in the art from the above description of exemplary embodiments.

Although the present disclosure has been described above with reference to limited embodiments and drawings, the present disclosure is not limited thereby and various modifications and variations may be made by a person having ordinary skill in the art to which the present disclosure pertains within the technical scope of the present disclosure and the equivalent scope of the appended claims.

## Claims

1. A secondary battery comprising an electrode assembly (100), the electrode assembly comprising:
a positive electrode (120) having a positive electrode active material on a positive electrode substrate;
a negative electrode (110) having a negative electrode active material on a negative electrode substrate; and
a separator,
wherein at least one of the positive electrode (120) or the negative electrode (110) comprises an electrode pattern (P1, P2) comprising a first coating material (111, 121, 311) and a second coating material (112, 122, 321) alternately arranged in an active material coating direction.

2. The secondary battery as claimed in claim 1, wherein the negative electrode (110) comprises the electrode pattern, and wherein the first coating material (111, 121, 311) and the second coating material (112, 122, 321) of the negative electrode are different from each other.

3. The secondary battery as claimed in claim 2, wherein the first coating material (111, 121, 311) has a larger expansion rate than the second coating material (112, 122, 321).

4. The secondary battery as claimed in one of claims 2 or 3, wherein the first coating material (111, 121, 311) is natural graphite, and
the second coating material (112, 122, 321) is artificial graphite.

5. The secondary battery as claimed in one of claims 2 or 3, wherein the first coating material (111, 121, 311) comprises a mixture of graphite and a Si-based compound, and
the second coating material (112, 122, 321) comprises graphite.

6. The secondary battery as claimed in one of claims 2 to 5, wherein an average particle size of the negative electrode active material in the first coating material (111, 121, 311) is greater than the average particle size of the negative electrode active material in the second coating material (112, 122, 321).

7. The secondary battery as claimed in one of claims 2 to 6, wherein the first coating material (111, 121, 311) is on the negative electrode substrate up to a first winding and a second winding of the negative electrode, and
the second coating material (112, 122, 321) is on the negative electrode substrate after the second winding.

8. The secondary battery as claimed in claim 1, wherein the negative electrode (110) comprises an electrode pattern (P1, P2) comprising a first coating material (111, 121, 311) and a second coating material (112, 122, 321) alternately arranged in an active material coating direction, and the first coating material (111, 121, 311) and the second coating material (112, 122, 321) in the negative electrode are identical to each other.

9. The secondary battery as claimed in claim 8, wherein the negative electrode (110) comprises the electrode pattern, and wherein the electrode pattern in the negative electrode comprises at least one non-coated portion between the first coating material (111, 121, 311) and the second coating material (112, 122, 321).

10. The secondary battery as claimed in claim 9, wherein the non-coated portion has a coating direction width of 10 mm or less.

11. A method of manufacturing a secondary battery comprising an electrode assembly (100), the method comprising:
forming the electrode assembly (100) comprising:
coating a positive electrode active material on a positive electrode substrate to form a positive electrode (120);
coating a negative electrode active material on a negative electrode substrate to form a negative electrode (110); and
placing a separator between the positive electrode (120) and the negative electrode (110),
wherein during at least one of the coating of the positive electrode active material or the coating of the negative electrode active material, a first coating material (111, 121, 311) and a second coating material (112, 122, 321) are alternately coated on the respective positive electrode substrate or negative electrode substrate.

12. The method as claimed in claim 11, wherein the first coating material (111, 121, 311) and the second coating material (112, 122, 321) are identical.

13. The method as claimed in claim 11, wherein the first coating material (111, 121, 311) and the second coating material (112, 122, 321) are different from each other.

14. The method as claimed in claim 13, wherein the first coating material (111, 121, 311) comprises an active material having a larger expansion rate than the second coating material (112, 122, 321).

15. An apparatus for operating the method of one of claims 11 to 14, the apparatus comprising a valve of a first cavity (31) comprising a first coating material and a valve of a second cavity (32) comprising a second coating material, wherein the valves are configured to be alternately and independently opened and closed.
